# EUROPEAN PATENT APPLICATION

(11) **EP 4 398 281 A1**
(43) Date of publication of application: **10.07.2024**
(21) Application number: 22892444.5
(22) Date of filing: 03.10.2022
(51) Int. Cl.: H01H 37/04, H01H 37/54

(54) **BREAKER, SAFETY CIRCUIT, AND SECONDARY BATTERY PACK**

(30) Priority: 12.11.2021 JP 2021184780
(71) Applicant: Bourns KK, Suita-shi, Osaka 564-0034 (JP)
(72) Inventor: NAMIKAWA Masashi, Suita-shi, Osaka 564-0034 (JP)
(74) Representative: Manitz Finsterwald Patent- und Rechtsanwaltspartnerschaft mbB
(86) International application number: PCT/JP2022/036941
(87) International publication number: WO 2023/084944

(57) **Abstract**

The breaker 1 has a fixed contact 21; a movable piece 4, which has an elastic portion 44 being elastically deformable and a movable contact 41 in one end portion of the elastic portion 44, and which is for pressing the movable contact 41 against the fixed contact 21 to contact therewith; a thermally-actuated element 5 which is deformed in response to temperature changes so as to shift the movable piece 4 from a conductive state in which the movable contact 41 contacts with the fixed contact 21 to a cut-off state in which the movable contact 41 is separated from the fixed contact 21; a case main body 7 which has an accommodation recess 73 for accommodating the fixed contact 21, the movable piece 4 and the thermally-actuated element 5; and a lid member 8 which is fixed to the case main body 7 and covers the accommodation recess 73. The lid member 8 has an embedding portion 81 in which a part of the movable piece 4 is embedded and a first recess 82 which is recessed in a thickness direction of the lid member 8. And the case main body 7 has a first protruding portion which is fitted into the first recess.

## Description

### Technical field

The present invention relates to a minisize breaker to be built into an electrical device, and the like.

### Background technique

Conventionally, breakers have been used as protective devices (safety circuits) for secondary batteries, motors, heaters, etc. of various electrical devices (see, for example, Patent Document 1).

### Prior art documents

### Patent document

Patent document 1: WO2011/105175

### Summary of the Invention

### Problems to be solved by the Invention

The above-mentioned Patent Document 1 discloses a breaker in which a case main body and a lid member are ultrasonically welded to form a case.

However, due to the vibration during welding, a movable piece is displaced with respect to an accommodation recess of the case main body, and when the movable piece is vibrated while interfering with the case main body, then resin of the case main body is scraped by the movable piece and generates cutting scrap. If the cutting scrap moves and becomes interposed between the movable contact and a fixed contact, there is a possibility of contact failure.

The present invention was made in view of the above-mentioned circumstances, and its primary objective is to provide a breaker in which it is possible to suppress the generation of cutting scrap when welding a case.

### Means of solving the Problems

The present invention is a breaker comprising:
a fixed contact;
a movable piece, which has an elastic portion being elastically deformable and a movable contact in one end portion of the elastic portion, and which is for pressing the movable contact against the fixed contact to contact therewith;
a thermally-actuated element which is deformed in response to temperature changes so as to shift the movable piece from a conductive state in which the movable contact contacts with the fixed contact to a cut-off state in which the movable contact is separated from the fixed contact;
a first resin case which has an accommodation recess for accommodating the fixed contact, the movable piece and the thermally-actuated element; and
a second resin case which is fixed to the first resin case and covers the accommodation recess,
wherein
the second resin case has an embedding portion in which a part of the movable piece is embedded, and a first recess which is recessed in a thickness direction of the second resin case, and
the first resin case has a first protruding portion which is fitted into the first recess.

In the breaker according to the present invention, it is preferable that
the first protruding portion comprises
a first side surface perpendicular to a short direction of the movable piece, and a second side surface perpendicular to a longer direction of the movable piece.

In the breaker according to the present invention, it is preferable that the first resin case has a first slope formed on an outside in the short direction of the movable piece, of the first protruding portion, and
the second resin case has a second slope corresponding to the first slope.

In the breaker according to the present invention, it is preferable that the second slope is provided, along an outer edge of the second resin case, with a rib protruding toward the first resin case.

In the breaker according to the present invention, it is preferable that the rib is formed continuously from the second slope to the embedding portion.

In the breaker according to the present invention, it is preferable that the first resin case has a second recess on the fixed contact side, and
the second resin case has a second protruding portion which is fitted into the second recess.

In the breaker according to the present invention, it is preferable that
the first protruding portion is disposed on an outside in the longer direction of the movable piece, of the accommodation recess.

In the breaker according to the present invention, it is preferable that
the second resin case comprises a projecting portion projecting toward the movable contact from the embedding portion, and
the first recess is formed on each side in the short direction of the movable piece, of the projecting portion.

The present invention is a safety circuit for an electrical device, comprising the breaker.

The present invention is a secondary battery pack comprising the breaker.

### Effect of the Invention

In the breaker of the present invention, a part of the movable piece is embedded in the second resin case. Thereby, the movable piece is fixed at an accurate position with respect to the second resin case.

The first resin case has the first protruding portion which fits into the first recess of the second resin case. The fitting between the first recess and the first protruding portion suppresses the displacement of the second resin case with respect to the first resin case during welding.

Accordingly, the movable piece is accurately positioned with respect to the first resin case, so displacement of the movable piece due to vibration during welding is suppressed, and generation of cutting scrap is suppressed.

### Brief description of the Drawing

[FIG. 1] A perspective view showing a state of a breaker, which is to be manufactured by the present invention, before assembled.
[FIG. 2] A cross-sectional view showing the above-said breaker in its normal charging or discharging state.
[FIG. 3] A cross-sectional view showing the above-said breaker in its overcharge state or abnormality.
[FIG. 4] A perspective view showing a lid member in which a movable piece and a cover piece are embedded.
[FIG. 5] A perspective view showing the case main body in which the fixing piece is embedded.

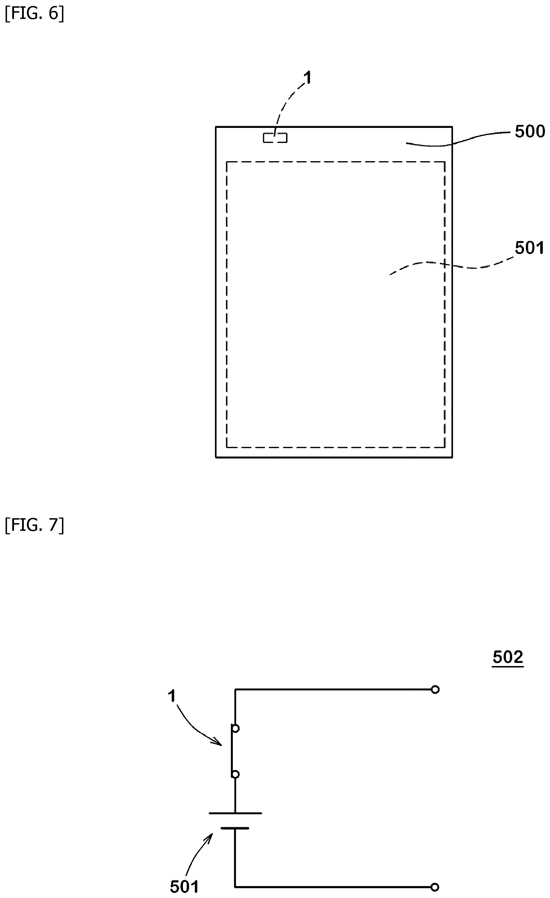

[FIG. 6] A plan view showing a configuration of a secondary battery pack equipped with the above-said breaker of the present invention.
[FIG. 7] A circuit diagram of a safety circuit comprising the above-said breaker of the present invention.

### Mode for carrying out the Invention

A breaker according to an embodiment of the present invention will be described with reference to the drawings.

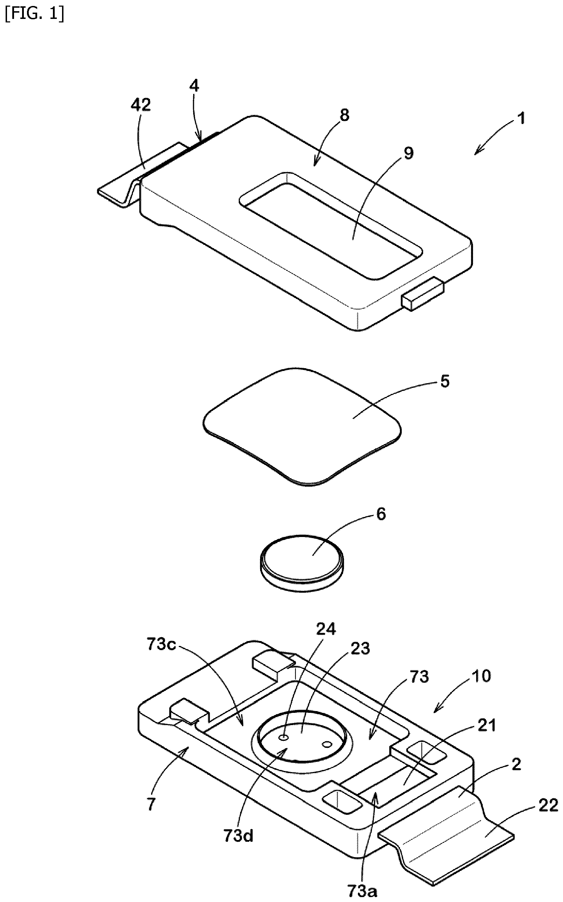

FIGS. 1 to 3 show a configuration of a breaker 1 manufactured according to the present invention.

The breaker 1 is mounted on an electrical equipment, etc., and protects the electrical equipment from excessive temperature rise or overcurrent.

The breaker 1 is composed of
a fixed piece 2 having a fixed contact 21,
a movable piece 4 having a movable contact 41 in its one end portion,
a thermally-actuated element 5 which deforms with temperature changes,
a PTC (Positive Temperature Coefficient) thermistor 6, and
a resin case 10 housing the fixed piece 2, the movable piece 4, the thermally-actuated element 5 and the PTC thermistor 6.

The resin case 10 is composed of a case main body (first resin case) 7, a lid member (second resin case) 8 attached to the upper surface of the case main body 7, and the like.

The fixed piece 2 is formed, for example, by pressing a metal plate whose main component is copper or the like (in addition, a metal plate made of copper-titanium alloy, nickel silver, brass, etc.), and is embedded in the case main body 7 by insert molding.

The fixed piece 2 is provided, in its one end portion, with a terminal 22 to be electrically connected to an external circuit, and in its other end portion, with a support portion 23 for supporting the PTC thermistor 6.

The terminal 22 protrudes to the outside of the case main body 7.

The PTC thermistor 6 is placed on convex projections (dowels) 24 which are formed at three positions on the support portion 23 of the fixed piece 2, and is supported by the projections 24.

Since the fixed piece 2 is bent in a stepwise manner, the fixed contact 21 and the support portion 23 are arranged at different levels and a space to accommodate the PTC thermistor 6 is easily secured.

The fixed contact 21 is formed at a position opposite to the movable contact 41 by cladding, plating, welding, coating, etc. with a highly conductive material such as silver, nickel, nickel-silver alloy, copper-silver alloy, or gold-silver alloy. And the fixed contact 21 is exposed through a part of an opening 73a formed inside the case main body 7.

The terminal 22 projects outward from an edge of the case main body 7.

The support portion 23 is exposed through an opening 73d formed inside the case main body 7.

In this application, unless otherwise noted, the description was made on the assumption that, with respect to the fixed piece 2, a first surface is the surface on which the fixed contact 21 is formed (i.e., the upper surface in FIG. 1), and a second surface is the surface on the opposite side.

The same applies to other parts such as the movable piece 4, the thermally-actuated element 5, the PTC thermistor 6 and the resin case 10.

The movable piece 4 is formed into an arm shape symmetrical with respect to its centerline along the longer direction, by pressing a plate-shaped metal material whose main component is copper or the like.

A portion of the movable piece 4 (the undermentioned fixed portion 43) is embedded in the lid member 8 by insert molding.

The movable contact 41 is formed in one end portion in the longer direction, of the movable piece 4.

The movable contact 41 is made of, for example, the same material as the fixed contact 21, and is joined to one end portion of the movable piece 4 by welding or other methods, cladding, crimping and the like.

In the other end portion of the movable piece 4, there is formed a terminal 42 electrically connected to an external circuit.

The terminal 42 protrudes outward from an edge of the lid member 8. Between the movable contact 41 and the terminal 42, there is provided the above-mentioned fixed portion 43 embedded in and fixed to the lid member 8. The fixed portion 43 is arranged on the terminal 42 side.

Between the movable contact 41 and the fixed portion 43, the movable piece 4 has an elastic portion 44.

The elastic portion 44 extends from the fixed portion 43 toward the movable contact 41.

The movable piece 4 is cantilever-supported by the lid member 8 at the fixed portion 43 on the base end side of the elastic portion 44, and
in this state, when the elastic portion 44 is elastically deformed toward the first surface, the movable contact 41 formed at the tip is pressed against and contacts with the fixed contact 21, and the fixed piece 2 and the movable piece 4 become a state in which electricity can flow therebetween.

It is preferable that the movable piece 4 is curved or bent at the elastic portion 44 by press working.

The degree of curvature or bending is not particularly limited as long as the thermally-actuated element 5 can be accommodated, and may be arbitrarily set in consideration of the elastic force at the operating temperature and reset temperature, the pressing force of the contacts, etc.

Further, a pair of projections (contact portions) 44a and 44b are formed on the second surface of the elastic portion 44 so as to face the thermally-actuated element 5.

The projections 44a, 44b contact with the thermally-actuated element 5 and, via the projections 44a, 44b, the deformation of the thermally-actuated element 5 is transmitted to the elastic portion 44 (see FIGS. 1, 2, and 3).

The thermally-actuated element 5 is arranged between the movable piece 4 and the PTC thermistor 6. That is, the thermally-actuated element 5 is placed on the first surface of the PTC thermistor 6, which will be described later.

The thermally-actuated element 5 shifts the state of the movable piece 4 from a conductive state in which the movable contact 41 contacts with the fixed contact 21 to a disconnected state in which the movable contact 41 is separated from the fixed contact 21.

By laminating thin plate materials having different coefficients of thermal expansion, the thermally-actuated element 5 is formed into a plate shape and has an initial shape whose cross section is curved into an arc.

The curved shape of the thermally-actuated element 5 is reversely warped with a snap motion when the reverse-operation temperature is reached due to overheating, and is restored when the temperature drops below the normally-reset temperature due to cooling.

The initial shape of the thermally-actuated element 5 can be formed by press working.

The material and shape of the thermally-actuated element 5 are not particularly limited as long as the thermally-actuated element 5 pushes up the elastic portion 44 of the movable piece 4 due to the reversely-warping deformation at the desired temperature, and is returned to its original state by the elastic force of the elastic portion 44.

However, from the viewpoint of productivity and efficiency of reversely-warping deformation, a rectangular shape is preferred.

As to the materials for the thermally-actuated element 5, two types of materials having different thermal expansion coefficients and made of various alloys, e.g. nickel silver, brass, stainless steel and the like are used in combination as a laminated material depending on the required conditions.

For example, as a material for the thermally-actuated element 5 that can provide stable reverse-operation temperature and normally-reset temperature, preferred is a combination of a copper-nickel-manganese alloy on the high expansion side and an iron-nickel alloy on the low expansion side.

Further, a material which is more desirable from the viewpoint of chemical stability, includes a combination of an iron-nickel-chromium alloy on the high expansion side and an iron-nickel alloy on the low expansion side. Furthermore, a material which is more desirable from the viewpoint of chemical stability and processability, includes a combination of an iron-nickel-chromium alloy on the high-expansion side and an iron-nickel-cobalt alloy on the low-expansion side.

When the movable piece 4 is in the cut-off state, the PTC thermistor 6 makes it conductive between the fixed piece 2 and the movable piece 4 via the thermally-actuated element 5.

The PTC thermistor 6 is disposed between the fixed piece 2 and the thermally-actuated element 5. That is, the support portion 23 of the fixed piece 2 is located directly below the thermally-actuated element 5 with the PTC thermistor 6 in between.

When the current flow between the fixed piece 2 and the movable piece 4 is cut off due to the reversely-warping deformation of the thermally-actuated element 5, the current flowing through the PTC thermistor 6 is increased.

As long as the PTC thermistor 6 is a positive characteristic thermistor whose resistance increases as the temperature rises and limits its current, the type can be selected depending on the operating current, operating voltage, operating temperature, reset temperature, etc. And the material and shape are not particularly limited as long as these characteristics are not impaired.

In this embodiment, a ceramic sintered body containing barium titanate, strontium titanate, or calcium titanate is used.

In addition to the ceramic sintered body, a so-called polymer PTC, which is a polymer containing conductive particles such as carbon, may be used.

The case main body 7 and the lid member 8 constituting the resin case 10, are molded from thermoplastic resin such as flame-retardant polyamide, polyphenylene sulfide (PPS) with excellent heat resistance, liquid crystal polymer (LCP), and polybutylene terephthalate (PBT).

As long as properties equivalent to or better than those of the resins described above can be obtained, materials other than resins may be used.

On the first surface side of the case main body 7, there is formed an accommodation recess 73 which is an internal space for accommodating the fixed contact 21, the movable piece 4, the thermally-actuated element 5, the PTC thermistor 6, and the like.

The accommodation recess 73 has an opening 73a for the reception of the fixed contact 21 and the movable piece 4, an opening 73c for the reception of the movable piece 4 and the thermally-actuated element 5, an opening 73d for the reception of the PTC thermistor 6, and the like.

The edges of the movable piece 4 and the thermally-actuated element 5 mounted into the case main body 7 are brought into contact with frames forming the accommodation recess 73 and guided when the thermally-actuated element 5 makes reversely-warping deformation. That is, the accommodation recess 73 accommodates the movable piece 4 and the thermally-actuated element 5 so that they can deform.

The lid member 8 is configured to cover the accommodation recess 73.

The lid member 8 may be configured to cover at least a portion of the accommodation recess 73.

In the lid member 8, a cover piece 9 which is made of a metal plate containing copper or the like as a main component or made of stainless steel or the like, is embedded by insert molding.

The cover piece 9 is embedded in the lid member 8 in a state being in contact with the first surface of the fixed portion 43 of the movable piece 4.

The cover piece 9 limits the movement of the movable piece 4, and increases the rigidity and strength of the lid member 8 and consequently the resin case 10 as a housing, contributing to miniaturization of the breaker 1.

The case main body 7 and the lid member 8 are formed by injection molding using the above-mentioned resin material. As already described, the fixed piece 2 is inserted in the case main body 7, and the movable piece 4 and the cover piece 9 are inserted in the lid member 8.

As shown in FIG. 1, the lid member 8 is attached to the case main body 7 so as to close the openings 73a, 73c, etc. of the case main body 7 housing the fixed piece 2, the movable piece 4, the thermally-actuated element 5, the PTC thermistor 6, etc.

The accommodation recess 73 is covered by the lid member 8.

The case main body 7 and the lid member 8 are joined by, for example, ultrasonic welding. Thereby, the resin case 10 is formed.

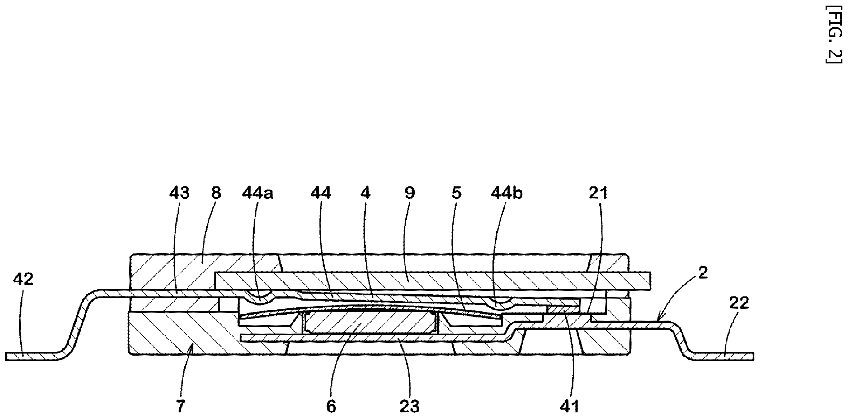

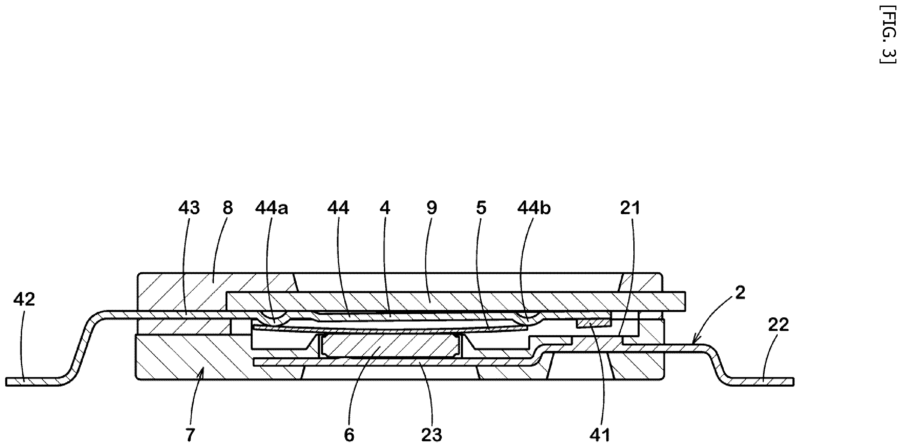

FIGS. 2 and 3 schematically show the operations of the breaker 1.

FIG. 2 shows the operation of the breaker 1 in the normal charging or discharging state.

In the normal charging or discharging state, the thermally-actuated element 5 maintains its initial shape before being reversely warped.

When the movable contact 41 is pressed toward the fixed contact 21 by the elastic portion 44, the movable contact 41 and the fixed contact 21 come into contact with each other, and the fixed piece 2 and the movable piece 4 of the breaker 1 are placed in a state where they are electrically connected via the elastic portion 44 of the movable piece 4.

The elastic portion 44 of the movable piece 4 may be in contact with the thermally-actuated element 5.

In this case, the movable piece 4, the thermally-actuated element 5, the PTC thermistor 6 and the fixed piece 2 are electrically connected as a circuit.

But, as the resistance of the PTC thermistor 6 is overwhelmingly larger than the resistance of the movable piece 4, the current flowing through the PTC thermistor 6 is negligibly small in substance when compared with the amount flowing through the fixed contact 21 and the movable contact 41.

FIG. 3 shows the operation of the breaker 1 in an overcharged state or in an abnormal state.

The thermally-actuated element 5 in which thin plate materials having different coefficients of thermal expansion are laminated, deforms as the temperature rises so that the initial curved shape shown in FIG. 2 is remedied. Then, the thermally-actuated element 5 which has reached the operating temperature is snap-deformed into a reversely warped shape as shown in FIG. 3.

Thereby, the thermally-actuated element 5 comes into contact with the elastic portion 44 of the movable piece 4, and the elastic portion 44 is pushed up by the thermally-actuated element 5, and as a result, the fixed contact 21 and the movable contact 41 are separated from each other.

At this time, the current flowing between the fixed contact 21 and the movable contact 41 is cut off.

On the other hand, the thermally-actuated element 5 comes into contact with the movable piece 4, and a slight leakage current flows through the thermally-actuated element 5 and the PTC thermistor 6. That is, the PTC thermistor 6 causes the fixed piece 2 and the movable piece 4 to be electrically connected via the thermally-actuated element 5 which caused the movable piece 4 to shift into the cut-off state.

As long as such leakage current flows, the PTC thermistor 6 continues to generate heat, and maintains the thermally-actuated element 5 in the reversely warped state to dramatically increases the resistance value, therefore, the current does not flow between the fixed contact 21 and the movable contact 41, and only the slight leakage current described above exists (constitutes a self-holding circuit). This leakage current can be used for other functions of the safety device.

When the overcharge state is canceled or the abnormal state is eliminated, the heat generated by the PTC thermistor 6 stops, and the thermally-actuated element 5 returns to the normal rotation reset temperature and restores its original initial shape.

Then, the movable contact 41 and the fixed contact 21 come into contact again due to the elastic force of the elastic portion 44 of the movable piece 4, and the circuit is released from the disconnected state and returns to the conductive state shown in FIG. 2.

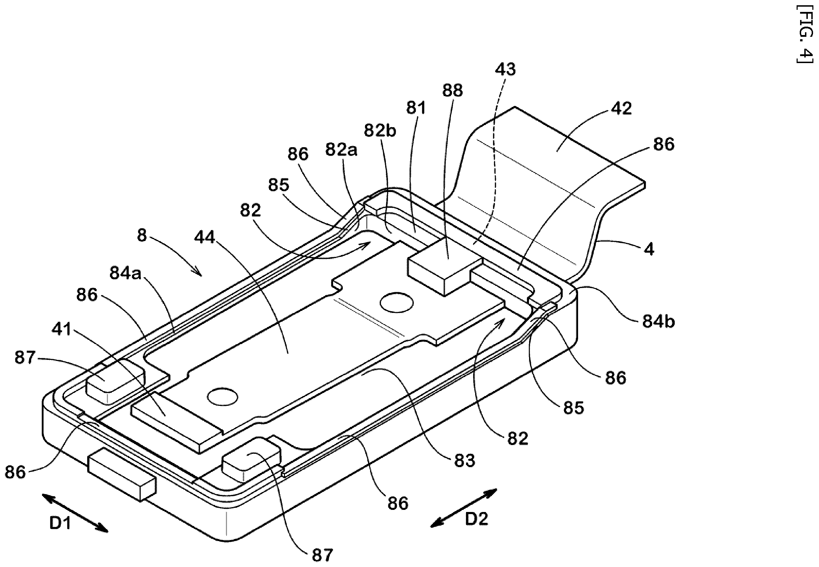

FIG. 4 shows the lid member 8 in which the movable piece 4 and the cover piece 9 are embedded.

The lid member 8 has a first recess 82 and an embedding portion 81 in which the movable piece 4 is embedded.

The embedding portion 81 embeds the fixed portion 43 of the movable piece 4. Thereby, the movable piece 4 is fixed at an accurate position relative to the lid member 8.

The embedding portion 81 is formed to extend in the short direction D1 of the movable piece 4 along an edge on the terminal 42 side, of the lid member 8. In this embodiment, the embedding portion 81 extends to edges in the short direction D1, of the lid member 8.

The first recess 82 is recessed in the thickness direction of the lid member 8 from the embedding portion 81.

The first recess 82 is formed across both outer sides in the short direction D1, of the movable piece 4.

Furthermore, in this embodiment, the first recess 82 is formed along the longer direction D2 of the movable piece 4.

The first recess 82 constitutes a part of an accommodation recess 83 for accommodating the elastic portion 44 and the movable contact 41 of the movable piece 4.

By providing the lid member 8 with the first recess 82, the cover piece 9 is exposed to the accommodation recess 83.

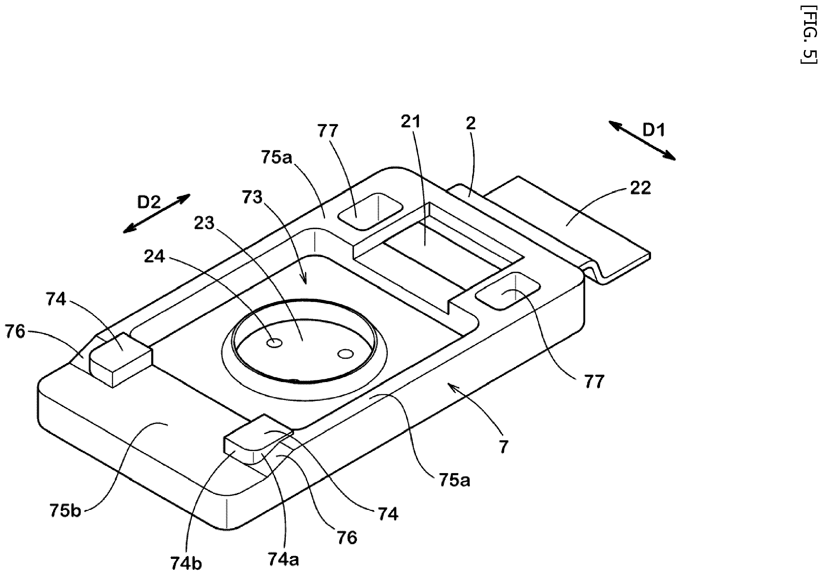

FIG. 5 shows the case main body 7 in which the fixed piece 2 is embedded. The case main body 7 has a first protruding portion 74 protruding toward the lid member 8.

The first protruding portion 74 is formed in a position and a shape corresponding to the first recess 82.

When the lid member 8 is attached to the case main body 7, the first protruding portion 74 of the case main body 7 is fitted into the first recess 82 of the lid member 8.

The fitting between the first recess 82 and the first protruding portion 74 suppresses displacement of the lid member 8 with respect to the case main body 7 during welding.

At this time, the movable piece 4 is accurately positioned with respect to the case main body 7 via the lid member 8 since the movable piece 4 is fixed at an accurate position with respect to the lid member 8 by insert molding.

Thereby, displacement of the movable piece 4 with respect to the accommodation recess 63 due to vibration during welding is suppressed, and the generation of cutting scrap is suppressed.

It is preferable that the first protruding portion 74 comprises
a first side surface 74a perpendicular to the short direction D1 of the movable piece 4, and
a second side surface 74b perpendicular to the longer direction D2 of the movable piece 4.

The first side surface 74a and the second side surface 74b are orthogonal to each other.

As shown in FIG. 4, the first recess 82 comprises a third side surface 82a opposing the first side surface 74a, and a fourth side surface 82b opposing the second side surface 74b.

By making contact between the first side surface 74a and the third side surface 82a, displacement of the lid member 8 in the short direction D1 with respect to the case main body 7 is suppressed.

By making contact between the second side surface 74b and the fourth side surface 82b, displacement of the lid member 8 in the longer direction D2 with respect to the case main body 7 is suppressed.

As shown in FIG. 4, the lid member 8 has a first bottom surface 84a and a second bottom surface 84b.

The first bottom surface 84a is formed from the periphery of the movable contact 41 to the sides of the elastic portion 44.

The second bottom surface 84b is formed in the embedding portion 81.

The embedding portion 81 protrudes toward the case main body 7 in order to embed the fixed portion 43 of the movable piece 4.

Therefore, the second bottom surface 84b projects further toward the case main body 7 than the first bottom surface 84a.

As shown in FIG. 5, the case main body 7 has a first top surface 75a and a second top surface 75b.

The first top surface 75a is formed from the periphery of the fixed contact 21 to the lateral periphery of the accommodation recess 73.

The second top surface 75b is formed on the terminal 42 side of the movable piece 4 with respect to the accommodation recess 73.

As shown in FIGS. 4 and 5, the height of the second top surface 75b with respect to the first top surface 75a is set according to the height of the second bottom surface 84b with respect to the first bottom surface 84a.

Therefore, the height of the first top surface 75a is set to be higher than the height of the second top surface 75b, from the bottom surface (second surface) of the case main body 7.

When the lid member 8 is attached to the case main body 7, the first top surface 75a and the first bottom surface 84a come into contact with each other and are welded together, and the second top surface 75b and the second bottom surface 84b come into contact with each other and are welded together.

The case main body 7 is provided with a pair of first slopes 76.

The first slope 76 is formed on an outside in the short direction D1, of the first protruding portion 74.

The first slope 76 is arranged between the first top surface 75a and the second top surface 75b, and connects between the first top surface 75a and the second top surface 75b which have different heights.

The first top surface 75a, the second top surface 75b, and the first slope 76 constitute an outer peripheral portion continuously extending along the outer edge of the case main body 7.

The lid member 8 is provided with a pair of second slopes 85.

The second slope 85 is formed at a position corresponding to the first slope 76, that is, on an outside in the short direction D1, of the first recess 82.

The second slope 85 is arranged between the first bottom surface 84a and the second bottom surface 84b, and connects between the first bottom surface 84a and the second bottom surface 84b which have different heights.

The first bottom surface 84a, the second bottom surface 84b, and the second slopes 85 constitute an outer peripheral portion continuously extending along the outer edge of the lid member 8.

When the lid member 8 is attached to the case main body 7, the first slope 76 and the second slope 85 come into contact with each other and are welded together.

The first slope 76 and the second slope 85 smoothly absorb
the difference in level between the first top surface 75a and the second top surface 75b and
the difference in level between the first bottom surface 84a and the second bottom surface 84b.

And the airtightness between the case main body 7 and the lid member 8 can be easily improved.

It is preferable that the second slope 85 is provided with a rib 86.

The rib 86 is formed along the outer edge of the lid member 8 so as to protrude toward the case main body 7.

When the case main body 7 and the lid member 8 are welded together, the ribs 86 melt at an initial stage of welding, which makes the welding between the case main body 7 and the lid member 8 better.

It is preferable that the rib 86 is formed continuously from the second slope 85 to the embedding portion 81.

The rib 86 in this embodiment is formed so as to extend continuously along the outer edge of the lid member 8 around the first bottom surface 84a, the second slope 85, and the second bottom surface 84b.

Owing to such rib 86, the welding between the case main body 7 and the lid member 8 becomes much better, and the airtightness between the case main body 7 and the lid member 8 is easily improved.

Instead of the rib 86, a rib may be formed on the first slope 76.

In this case, it is preferably formed so as to extend continuously along the outer edge of the case main body 7 around the first top surface 75a, the first slope 76, and the second top surface 75b.

The case main body 7 is provided with a second recess 77.

The second recess 77 is arranged closer to the fixed contact 21 than the opening 73c for accommodating the thermally-actuated element 5.

In this embodiment, the second recess 77 is provided on each side in the short direction D1, of the fixed contact 21.

The lid member 8 is provided with a second protruding portion 87.

The second protruding portion 87 is formed at a position corresponding to the second recess 77.

When the lid member 8 is attached to the case main body 7, the second protruding portion 87 is fitted into the second recess 77.

By fitting the second protruding portion 87 into the second recess 77, the lid member 8 is positioned more accurately with respect to the case main body 7 at the periphery of the fixed contact 21 and the movable contact 41.

In the present embodiment, owing to the fitting between the first protruding portion 74 and the first recess 82, and the fitting between the second protruding portion 87 and the second recess 77,
the entire lid member 8 is more accurately positioned with respect to the case main body 7 and fixed thereto.

It is preferable that the first protruding portion 74 is disposed on an outside in the longer direction D2, of the accommodation recess 73.

With such configuration, the lid member 8 is positioned and fixed to the case main body 7 more accurately.

Further, it is preferable that the second recess 77 is disposed on the opposite side in the longer direction D2, of the first protruding portion 74 with the accommodation recess 73 in between.

With this configuration, the lid member 8 is more accurately positioned with respect to the case main body 7 near four corners of the lid member 8, and fixed thereto.

The lid member 8 of this embodiment comprises a projecting portion 88 projecting from the embedding portion 81 toward the movable contact 41.

By providing the projecting portion 88, the movable piece 4 is sandwiched between the cover piece 9 and the projecting portion 88, and is firmly fixed to the lid member 8 at an accurate position.

It is preferable that the projecting portion 88 is formed between a pair of the first recesses 82. In other words, it is preferable that the first recess 82 is formed on each side in the short direction D1, of the projecting portion 88. This arrangement allows the movable piece 4 to be positioned more accurately with respect to the case main body 7.

While detailed description has been made of the breaker 1 of the present invention, the present invention can be embodied in various modes without being limited to the above-described specific embodiment.

That is, the breaker 1 of the present invention is a breaker 1 which has at least a fixed contact 21;
a movable piece 4, which has an elastic portion 44 being elastically deformable and a movable contact 41 in one end portion of the elastic portion 44, and which is for pressing the movable contact 41 against the fixed contact 21 to contact therewith;
a thermally-actuated element 5 which is deformed in response to temperature changes so as to shift the movable piece 4 from a conductive state in which the movable contact 41 contacts with the fixed contact 21 to a cut-off state in which the movable contact 41 is separated from the fixed contact 21;
a case main body 7 which has an accommodation recess 73 for accommodating the fixed contact 21, the movable piece 4 and the thermally-actuated element 5; and
a lid member 8 which is fixed to the case main body 7 and covers the accommodation recess 73, wherein
it is sufficient if the lid member 8 has an embedding portion 81 in which a part of the movable piece 4 is embedded, and a first recess 82 which is recessed in a thickness direction of the lid member 8, and the case main body 7 has a first protruding portion 74 which is fitted into the first recess 82.

### Description of the signs

1: Breaker
4: Movable piece
5: Thermally-actuated element
6: PTC thermistor (Thermally-actuated element)
7: Case main body (First resin case)
8: Lid member (Second resin case)
10: Resin case
21: Fixed contact
41: Movable contact
44: Elastic portion
73: Accommodation recess
74: First protruding portion
74a: First side surface
74b: Second side surface
76: First slope
77: Second recess
81: Embedding portion
82: First recess
83: Accommodation recess
85: Second slope
86: Rib
87: Second protruding portion
88: Projecting portion
D1: Short direction
D2: Longer direction

## Claims

1. A breaker comprising:
a fixed contact;
a movable piece, which has an elastic portion being elastically deformable and a movable contact in one end portion of the elastic portion, and which is for pressing the movable contact against the fixed contact to contact therewith;
a thermally-actuated element which is deformed in response to temperature changes so as to shift the movable piece from a conductive state in which the movable contact contacts with the fixed contact to a cut-off state in which the movable contact is separated from the fixed contact;
a first resin case which has an accommodation recess for accommodating the fixed contact, the movable piece and the thermally-actuated element; and
a second resin case which is fixed to the first resin case and covers the accommodation recess,
wherein
the second resin case has an embedding portion in which a part of the movable piece is embedded, and a first recess which is recessed in a thickness direction of the second resin case, and
the first resin case has a first protruding portion which is fitted into the first recess.

2. The breaker as set forth in claim 1, wherein
the first protruding portion comprises
a first side surface perpendicular to a short direction of the movable piece, and
a second side surface perpendicular to a longer direction of the movable piece.

3. The breaker as set forth in claim 1 or 2, wherein
the first resin case has a first slope formed on an outside in the short direction of the movable piece, of the first protruding portion, and
the second resin case has a second slope corresponding to the first slope.

4. The breaker as set forth in claim 3, wherein
the second slope is provided, along an outer edge of the second resin case, with a rib protruding toward the first resin case.

5. The breaker as set forth in claim 4, wherein
the rib is formed continuously from the second slope to the embedding portion.

6. The breaker as set forth in any one of claims 1 to 5, wherein
the first resin case has a second recess on the fixed contact side, and
the second resin case has a second protruding portion which is fitted into the second recess.

7. The breaker as set forth in any one of claims 1 to 6, wherein
the first protruding portion is disposed on an outside in the longer direction of the movable piece, of the accommodation recess.

8. The breaker as set forth in any one of claims 1 to 7, wherein
the second resin case comprises a projecting portion projecting toward the movable contact from the embedding portion, and
the first recess is formed on each side in the short direction of the movable piece, of the projecting portion.

9. A safety circuit for an electrical device, comprising the breaker as set forth in any one of claims 1 to 8.

10. A secondary battery pack comprising the breaker as set forth in any one of claims 1 to 8.
